# EUROPÄISCHE PATENTANMELDUNG

(11) **EP 1 752 699 A2**
(43) Veröffentlichungstag der Anmeldung: **14.02.2007**
(21) Anmeldenummer: 06016782.2
(22) Anmeldetag: 11.08.2006
(51) Int. Cl.: F16L 47/20, F16L 9/147

(54) **Leitungsverbund zwischen einem Fitting und einem Verbundrohr sowie ein Verfahren zur Herstellung des Leitungsverbundes**

(30) Priorität: 13.08.2005 DE 102005038472
(71) Anmelder: Becker Plastics GmbH, 45711 Datteln (DE)
(72) Erfinder: Seydel, Achim, 45711 Datteln (DE)
(74) Vertreter: Albrecht, Rainer Harald

(57) **Zusammenfassung**

Die Erfindung betrifft einen Leitungsverbund (2) zwischen einem Fitting (1) und einem Verbundrohr (3), insbesondere für die Sanitär- und Heizungsinstallation. Das Verbundrohr (3) weist eine Innenschicht (4) und eine Außenschicht (5) aus einem schweißbaren Kunststoff mit einer dazwischen angeordneten Schicht aus Metall (6) auf, wobei die Schicht aus Metall (6) in Richtung der Rohrinnenseite durch eine erste Klebstoffschicht (7) mit der Innenschicht (4) und in Richtung der Rohraußenseite durch eine zweite Klebstoffschicht (8) mit der Außenschicht (5) verbunden ist. Ein Ende des Verbundrohres (3) ist in das Fitting (1), welches das Verbundrohr (3) entlang einer Kontaktfläche (9) umgibt und eine innere Schicht (10) aus einem schweißbaren Kunststoff aufweist, eingesteckt. Das Verbundrohr (3) und das Fitting (1) sind durch Aufschmelzen der aus schweißbarem Kunststoff bestehenden Kontaktfläche (9) stoffschlüssig verbunden. Die Schicht aus Metall (6) ist an der Stirnseite (11) des in das Fitting (1) eingesetzten Verbundrohres (3) durch eine ringförmige Wulst (12) aus schweißbarem Kunststoff, die beim Einsetzen des Verbundrohres (3) in das Fitting (1) entsteht, vollständig abgedeckt.

## Beschreibung

Die Erfindung betrifft einen Leitungsverbund zwischen einem Fitting und einem Verbundrohr, insbesondere für die Sanitär- und Heizungsinstallation, wobei das Verbundrohr eine Innenschicht und eine Außenschicht aus einem schweißbaren Kunststoff mit einer dazwischen angeordneten Schicht aus Metall aufweist, sowie ein Verfahren zur Herstellung eines Leitungsverbundes. Schweißbare Kunststoffe sind insbesondere Polyethylen, Polypropylen und Polybuten.

Verbundrohre mit Schichten aus Metall und Polymeren sind aus der Praxis bekannt. Derartige Verbundrohre für die Sanitär- und Heizungsinstallation weisen eine zwischen Polymerschichten angeordnete Metallschicht auf, die vornehmlich als mechanische Verstärkung dient. Zur Erstellung eines Leitungssystems werden die Verbundrohre mit Fittings aneinandergefügt, wobei die Verbundrohre durch Verklebung oder Verschweißen druckfest mit den Fittings verbunden werden können. Um bei der Verbindung eines Verbundrohres mit einem Fitting einen Kontakt der Schicht aus Metall mit dem in dem Verbundrohr geförderten Medium und eine damit verbundene Oxidation der Metallschicht zuverlässig zu verhindern, wird vor der Verbindung die äußere Hülle der Verbundrohre einschließlich der Schicht aus Metall entfernt, was zu einem großen Zeitaufwand bei der Montage führt.

Aus der Praxis ist weiterhin bekannt, Rohre und Fittings, die ausschließlich aus Polymeren bestehen, durch Erwärmung zu verbinden, wobei die Kontaktfläche zwischen Polymerrohr und Fitting aufgeschmolzen wird und sich die Materialien des Polymerrohres und des Fittings dauerhaft binden.

Aus DE 44 44 097 A1 ist ein Fitting zum Verbinden von Verbundrohren bekannt, die eine Innenschicht sowie eine Außenschicht aus einem schweißbaren Kunststoff und eine dazwischen angeordnete Schicht aus Metall aufweisen.

Das Fitting besteht aus einem Kunststoffkörper, in den ein elektrisches Widerstandsheizelement eingebettet ist. Der Kunststoffkörper weist hülsenförmige Einsteckabschnitte und eine die Einsteckabschnitte begrenzende ringförmige Rippe auf, die Stoßflächen für die einzuführenden Verbundrohre bilden. Innerhalb der Rippe sind Heizwendel des Widerstandsheizelementes angeordnet. Durch Bestromung des Widerstandsheizelementes wird das Fitting mit den Rohren verschweißt, wobei die ringförmige Rippe teilweise aufgeschmolzen wird und die Stirnflächen der Rohre umschließt. Das Fitting ist fertigungstechnisch aufwendig. Beim Verbinden der Rohre und des Fittings ist darauf zu achten, dass die Stirnflächen des Rohres während der Bestromung des Widerstandsheizelementes fest an der ringförmigen Rippe des Fittings anliegen. Nur dann entsteht ein ordnungsgemäßer Verbund und ist gewährleistet, dass die an der Stirnseite des Verbundrohres freiliegende Metallschicht nicht mit Fluid in Berührung kommt.

Vor diesem Hintergrund liegt der Erfindung die Aufgabe zugrunde, einen dauerhaften Leitungsverbund zwischen einem Fitting und einem Verbundrohr anzugeben, der bei einer Minimierung der Arbeitsschritte eine schnelle und sichere Montage ermöglicht, wobei jeglicher Kontakt der an der Stirnseite des Verbundrohres freiliegenden Metallschicht mit Fluid, welches den Leitungsverbund durchströmt, vermieden werden soll. Das Fitting soll einen konstruktiv einfachen Aufbau aufweisen und sich kostengünstig fertigen lassen.

Die Aufgabe wird erfindungsgemäß durch einen Leitungsverbund zwischen einem Fitting und einem Verbundrohr, insbesondere für die Sanitär- und Heizungsinstallation, gelöst, wobei das Verbundrohr eine Innenschicht und eine Außenschicht aus einem schweißbaren Kunststoff mit einer dazwischen angeordneten Schicht aus Metall aufweist, die in Richtung der Rohrinnenseite durch eine erste Klebstoffschicht mit der Innenschicht und in Richtung der Rohraußenseite durch eine zweite Klebstoffschicht mit der Außenschicht verbunden ist, wobei ein Ende des Verbundrohres in das Fitting, welches das Verbundrohr entlang einer Kontaktfläche umgibt und eine innere Schicht aus einem schweißbaren Kunststoff aufweist, eingesteckt ist, wobei das Verbundrohr und das Fitting durch Aufschmelzen der aus schweißbarem Kunststoff bestehenden Kontaktfläche stoffschlüssig verbunden sind, und wobei die Metallschicht an der Stirnseite des in das Fitting eingesetzten Verbundrohres durch eine ringförmige Wulst aus schweißbarem Kunststoff, die beim Einsetzen des Rohres in das Fitting entsteht, vollständig abgedeckt ist. Die ringförmige Wulst ist aus dem Material des Fittings und/oder dem Material der Außenschicht des Verbundrohres gebildet und trennt die an der Stirnseite des Verbundrohres freiliegende Metallschicht von dem fluiddurchströmten Raum des Leitungsverbundes. Sie entsteht durch Kontakt und Materialverdrängung beim Einschieben des Verbundrohres in das Fitting. Geeignete schweißbare Kunststoffe sind vorzugsweise Polyethylen, Polypropylen oder Polybuten.

Die Fittings, die in einer bevorzugten Ausführung der Erfindung vollständig aus schweißbarem Kunststoff, insbesondere Polyethylen, Polypropylen oder Polybuten bestehen und so kostengünstig zu fertigen sind, können als gerade oder abgewinkelte Stücke zur Verbindung von zwei Verbundrohren oder als Abzweig- und T-Stücke zur Verbindung von mehr als zwei Verbundrohren ausgebildet sein. Sie enthalten keine integrierten Widerstandsheizeinrichtungen. Im Rahmen der Erfindung können die Fittings Anschlussenden von Regel- und/oder Absperrventilen sein. In einer bevorzugten Ausführung der Erfindung ist der Öffnungsbereich des Fittings, in welches das Verbundrohr eingesteckt ist, konisch erweitert.

Der Außendurchmesser der Verbundrohre und der Innendurchmesser der die Verbundrohre aufnehmenden Fittings liegen beispielsweise in einem Bereich zwischen 12 mm und 63 mm. Vorzugsweise weist die Innenschicht und/oder die Außenschicht des Verbundrohres aus schweißbarem Kunststoff eine Dicke zwischen 0,5 mm und 3 mm auf. Die Schicht aus Metall weist vorzugsweise eine Dicke von 0,2 mm und 1,0 mm auf und ist jeweils mit einer Klebstoffschicht mit der Innenschicht und der Außenschicht verbunden. Die Klebstoffschichten, die beispielsweise von einem Hotmeltklebstoff gebildet werden, sind üblicherweise deutlich dünner als die weiteren Schichten des Verbundrohres. Als Material für die Schicht aus Metall ist im besonderen Maße Aluminium oder rostfreier Stahl geeignet.

Die ringförmige Wulst, die beim Einsetzen des Rohres in das Fitting durch Kontakt und Materialverdrängung von thermoplastifiziertem Kunststoff entsteht und aus dem Material der Außenschicht des Verbundrohres und/oder der inneren Schicht des Fittings gebildet ist, kann über die Innenschicht hinaus etwas in das Innere des Verbundrohres vorstehen, wobei jedoch der Rohrquerschnitt nicht wesentlich reduziert wird. Die Wulst ist entlang ihres Umfanges mit der Innenschicht verschmolzen.

Das für den Leitungsverbund eingesetzte Verbundrohr weist vorzugsweise einen Längenausdehnungskoeffizienten in Längsrichtung auf, der in einem Temperaturbereich zwischen 20 °C und 90 °C kleiner als 1 x 10⁻⁴K⁻¹, besonders bevorzugt kleiner als 4 x 10⁻⁵K⁻¹ ist. Insbesondere können auch Verbundrohre eingesetzt werden, die eine Druckfestigkeit von mindestens 15 bar bei 70 °C und einen Biegeradius aufweisen, der kleiner ist als das Zehnfache des Durchmessers des Verbundrohres. Das Verbundrohr ist vornehmlich für Warmwasseranwendungen bis 95 °C bestimmt.

Gegenstand der Erfindung ist auch ein Verfahren zur Herstellung eines zuvor beschriebenen Leitungsverbundes zwischen einem Fitting und einem Verbundrohr, insbesondere für die Sanitär- und Heizungsinstallation, wobei das Fitting, welches zumindest eine innere Schicht aus einem schweißbaren Kunststoff aufweist, und das Verbundrohr, welches eine zwischen einer Innenschicht und einer Außenschicht aus schweißbarem Kunststoff angeordnete Schicht aus Metall aufweist, in einem Verbindungsbereich erwärmt werden, wodurch im Verbindungsbereich zumindest der schweißbare Kunststoff der Außenschicht des Verbundrohres und der inneren Schicht des Fittings erweicht wird, wobei das Verbundrohr mit einer Stirnseite in das Fitting eingeschoben wird, und dabei durch aufgeschmolzenen schweißbaren Kunststoff eine stoffschlüssige Verbindung zwischen dem Verbundrohr und dem Fitting hergestellt wird sowie eine ringförmige Wulst aus dem schweißbaren Kunststoff der Außenschicht des Verbundrohres und/oder der Innenschicht des Fittings gebildet wird, welche die Schicht aus Metall an der Stirnseite des Verbundrohres vollständig abdeckt.

In einer bevorzugten Ausführung der Erfindung werden die Innenseite des Fittings und/oder die Außenseite des Verbundrohres in dem Bereich, in dem das Verbundrohr in das Fitting eingeschoben wird, vor der Verbindung mechanisch bearbeitet. So kann beispielsweise der Öffnungsbereich des Fittings, in welches das Verbundrohr eingeschoben wird, vor der Erwärmung durch Schleifen oder Zerspanen konisch erweitert werden. Durch die Erweiterung des Innendurchmessers in dem Öffnungsbereich des Fittings, in welches das Verbundrohr eingeschoben wird, wird einerseits eine oberflächliche Oxidschicht entfernt, wodurch die Festigkeit der Schmelzverbindung der Kontaktfläche verbessert und das Einschieben des Verbundrohres in das Fitting erleichtert wird. Des Weiteren kann durch den Winkel des Konus die Schmelzeverteilung beeinflusst werden.

Im Folgenden wird die Erfindung anhand einer lediglich ein Ausführungsbeispiel darstellenden Zeichnung ausführlich erläutert. Es zeigen schematisch:
- Fig. 1: eine Schnittdarstellung eines erfindungsgemäßen Leitungsverbundes zwischen einem Fitting und einem Verbundrohr und
- Fig. 2: die Verfahrensschritte zur Herstellung eines erfindungsgemäßen Leitungsverbundes, wobei ein Verbundrohr und ein Fitting in einem Schnitt dargestellt sind.

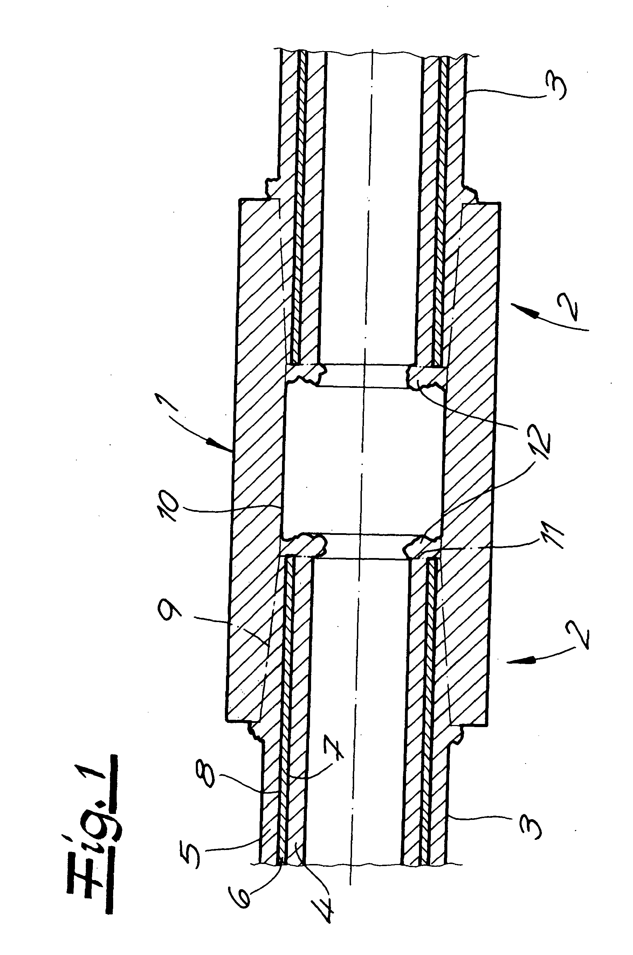

Die Fig. 1 zeigt ein gerades Fitting 1 aus Polypropylen, welches beidseitig einen Leitungsverbund 2 mit jeweils einem Verbundrohr 3 bildet. Die Verbundrohre 3 weisen eine Innenschicht 4 und eine Außenschicht 5 aus Polypropylen mit jeweils einer Dicke zwischen 0,5 mm und 3 mm auf. Zwischen der Innenschicht 4 und der Außenschicht 5 ist eine Schicht aus Metall 6, vorzugsweise Aluminium oder rostfreiem Stahl, angeordnet, die eine Dicke zwischen 0,2 mm und 1,0 mm aufweist und durch eine erste Klebstoffschicht 7 mit der Innenschicht 4 und mit einer zweiten Klebstoffschicht 8 mit der Außenschicht 5 verbunden ist. Jeweils ein Ende eines Verbundrohres 3 ist in das Fitting 1, welches jedes der Verbundrohre 3 entlang einer Kontaktfläche 9 umgibt, eingesteckt. Das Material der Außenschicht 5 des Verbundrohres 3 und der inneren Schicht 10 des Fittings 1 sind entlang der leicht konisch verlaufenden Kontaktfläche 9 miteinander verschmolzen und so dauerhaft verbunden. Der Innendurchmesser des Fittings 1 ist in dem mittleren Bereich des Fittings 1 kleiner als der Außendurchmesser des Verbundrohres 3. Die Schicht aus Metall 6 an der Stirnseite 11 jedes der in das Fitting 1 eingesetzten Verbundrohre 3 ist durch eine ringförmige Wulst 12 aus Polypropylen, die beim Einsetzen des Verbundrohres 3 in das Fitting 1 entsteht, vollständig abgedeckt. Jede ringförmige Wulst 12 ist aus dem Polypropylen der Außenschichten 5 der Verbundrohre 3 und der inneren Schicht 10 des Fittings 1 gebildet, wobei jede Wulst 12 auch mit der Innenschicht 4 des zugehörigen Verbundrohres 3 dauerhaft verschmolzen ist. Beide dargestellten Wülste 12 ragen in Richtung der Rohrachse über die Innenschicht 4 hinaus, wobei jedoch der Innendurchmesser nicht wesentlich reduziert ist. Bei dem Polypropylen als schweißbaren Kunststoff handelt es sich beispielsweise um ein ataktisches Polypropylen (PP-R).

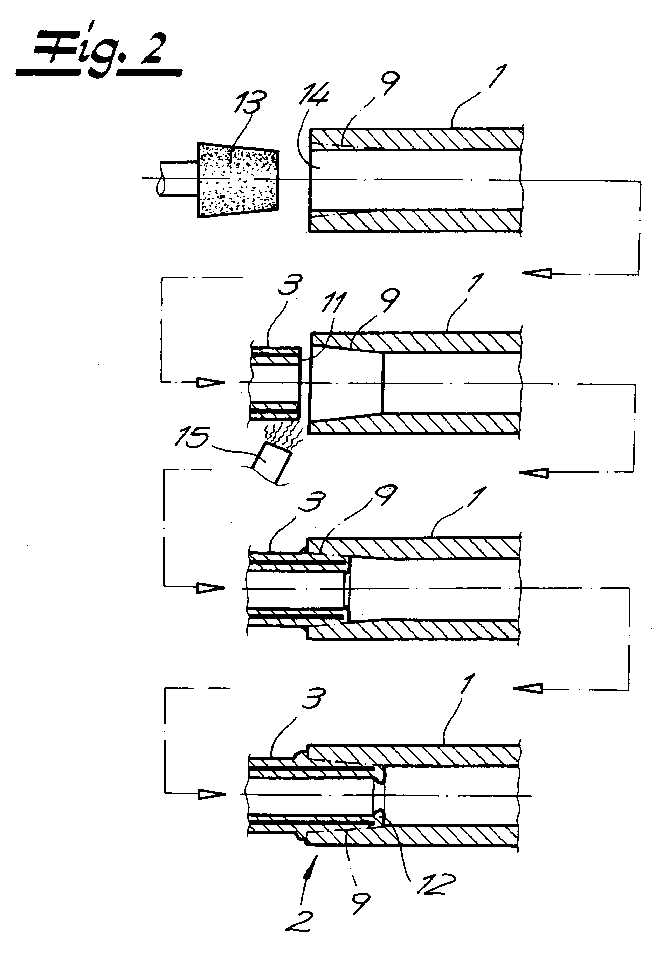

Wie in Fig. 2 dargestellt, wird bei der Herstellung eines Leitungsverbundes 2 die Innenseite des Fittings 1 in dem Bereich, in dem das Verbundrohr 3 in das Fitting 1 eingeschoben wird, vor der Verbindung mechanisch verarbeitet. Mit einem konisch geformten Schleifenwerkzeug 13 wird eine dünne Materialschicht in dem Öffnungsbereich 14 des Fittings 1 abgetragen. Durch die Entfernung der möglicherweise verschmutzten oder oxidierten Materialschicht wird eine verbesserte Verbindung mit dem Verbundrohr 3 erreicht. Zusätzlich wird durch eine konische Erweiterung des Öffnungsbereiches 14 das nachfolgende Einschieben des Verbundrohres 3 erleichtert. Anschließend an die mechanische Bearbeitung des Fittings 1 werden Fitting 1 und Verbundrohre 3 mittels einer Heizeinrichtung 15 in einem Abschnitt, der den späteren Verbindungsbereich bildet, erwärmt, wodurch der schweißbare Kunststoff der Innenschicht 4, der Außenschicht 6 und des Fittings 1 erweicht wird. Darauf folgend wird das Verbundrohr 3 mit seiner Stirnseite 11 in das Fitting 1 eingeschoben. Dabei wird durch aufgeschmolzenen schweißbaren Kunststoff eine stoffschlüssige Verbindung zwischen dem Verbundrohr 3 und dem Fitting 1 hergestellt sowie eine ringförmige Wulst 12 aus dem schweißbaren Kunststoff der Außenschicht 5 des Verbundrohres 3 und der inneren Schicht 10 des Fittings 1 gebildet. Bei einem weiteren Einschieben des Verbundrohres 3 wird die Schicht aus Metall 6 an der Stirnseite 11 des Verbundrohres 3 durch die ringförmige Wulst 12 vollständig abgedeckt. Der aufgeschmolzene schweißbare Kunststoff der Außenschicht 5 des Verbundrohres 3 und das der inneren Schicht 10 des Fittings 1 verbinden sich entlang einer das Ende des Verbundrohres 3 umgebenden Kontaktfläche 9 dauerhaft, so dass ein nach Erkalten des Fittings 1 und des Verbundrohres 3 dauerhafter und druckfester Leitungsverbund 2 entsteht.

## Patentansprüche

1. Leitungsverbund (2) zwischen einem Fitting (1) und einem Verbundrohr (3), insbesondere für die Sanitär- und Heizungsinstallation,
wobei das Verbundrohr (3) eine Innenschicht (4) und eine Außenschicht (5) aus einem schweißbaren Kunststoff mit einer dazwischen angeordneten Schicht aus Metall (6) aufweist, die in Richtung der Rohrinnenseite durch eine erste Klebstoffschicht (7) mit der Innenschicht (4) und in Richtung der Rohraußenseite durch eine zweite Klebstoffschicht (8) mit der Außenschicht (5) verbunden ist,
wobei ein Ende des Verbundrohres (3) in das Fitting (1), welches das Verbundrohr (3) entlang einer Kontaktfläche (9) umgibt und eine innere Schicht (10) aus einem schweißbaren Kunststoff aufweist, eingesteckt ist,
wobei das Verbundrohr (3) und das Fitting (1) durch Aufschmelzen der aus schweißbarem Kunststoff bestehenden Kontaktfläche (9) stoffschlüssig verbunden sind und
wobei die Schicht aus Metall (6) an der Stirnseite (11) des in das Fitting (1) eingesetzten Verbundrohres (3) durch eine ringförmige Wulst (12) aus schweißbarem Kunststoff, die beim Einsetzen des Verbundrohres (3) in das Fitting (1) entsteht, vollständig abgedeckt ist.

2. Leitungsverbund (2) nach Anspruch 1, **dadurch gekennzeichnet, dass** das Fitting (1) vollständig aus einem schweißbaren Kunststoff besteht.

3. Leitungsverbund (2) nach Anspruch 1 oder 2, **dadurch gekennzeichnet, dass** der schweißbare Kunststoff aus Polyethylen, Polypropylen oder Polybuten besteht.

4. Leitungsverbund (2) nach einem der Ansprüche 1 bis 3, **dadurch gekennzeichnet, dass** die Innenschicht (4) des Verbundrohres eine Dicke zwischen 0,5 und 3 mm aufweist.

5. Leitungsverbund (2) nach einem der Ansprüche 1 bis 4, **dadurch gekennzeichnet, dass** die Außenschicht (5) des Verbundrohres eine Dicke zwischen 0,5 und 3 mm aufweist.

6. Leitungsverbund (2) nach einem der Ansprüche 1 bis 5, **dadurch gekennzeichnet, dass** die Schicht aus Metall (6) eine Dicke zwischen 0,2 und 1,0 mm aufweist.

7. Leitungsverbund (2) nach einem der Ansprüche 1 bis 6, **dadurch gekennzeichnet, dass** die Schicht aus Metall (6) aus Aluminium oder rostfreiem Stahl besteht.

8. Leitungsverbund (2) nach einem der Ansprüche 1 bis 7, **dadurch gekennzeichnet, dass** der Öffnungsbereich (14) des Fittings (1), in welches das Verbundrohr (3) eingesteckt ist, konisch erweitert ist.

9. Verfahren zur Herstellung eines Leitungsverbundes (2) zwischen einem Fitting (1) und einem Verbundrohr (3), insbesondere für die Sanitär- und Heizungsinstallation, nach einem der Ansprüche 1 bis 7,
wobei das Fitting (1), welches zumindest eine innere Schicht (10) aus einem schweißbaren Kunststoff aufweist, und das Verbundrohr (3), welches eine zwischen einer Innenschicht (4) und einer Außenschicht (5) aus schweißbarem Kunststoff angeordnete Schicht aus Metall (6) aufweist, in einem Verbindungsbereich erwärmt werden, wodurch im Verbindungsbereich zumindest der schweißbare Kunststoff der Außenschicht (5) des Verbundrohres (3) und der inneren Schicht (10) des Fittings (1) erweicht wird,
wobei das Verbundrohr (3) mit einer Stirnseite (11) in das Fitting (1) eingeschoben wird und dabei durch aufgeschmolzenen schweißbaren Kunststoff eine stoffschlüssige Verbindung zwischen dem Verbundrohr (3) und dem Fitting (1) hergestellt wird sowie
außerdem eine ringförmige Wulst (12) aus dem schweißbaren Kunststoff der Außenschicht (5) des Verbundrohres (3) und/oder der inneren Schicht (10) des Fittings (1) gebildet wird, welche die Schicht aus Metall (6) an der Stirnseite (11) des Verbundrohres (3) vollständig abdeckt.

10. Verfahren nach Anspruch 9, **dadurch gekennzeichnet, dass** die Innenseite des Fittings (1) und/oder die Außenseite des Verbundrohres (3) in dem Bereich, in dem das Verbundrohr (3) in das Fitting (1) eingeschoben wird, vor der Verbindung mechanisch bearbeitet werden.

11. Verfahren nach Anspruch 10, **dadurch gekennzeichnet, dass** der Öffnungsbereich (14) des Fittings (1), in welches das Verbundrohr (3) eingeschoben wird, vor der Erwärmung durch Schleifen oder Zerspanen konisch erweitert wird.
